**Europäisches Patentamt**

**European Patent Office**

**Office européen des brevets**

(19)

(11) Veröffentlichungsnummer: **0 300 300 B1**

(12) **EUROPÄISCHE PATENTSCHRIFT**

(45) Veröffentlichungstag der Patentschrift: **22.01.92**

(21) Anmeldenummer: **88111001.9**

(22) Anmeldetag: **09.07.88**

(51) Int. Cl.⁵: **C03C 17/04**, C03C 8/08, C03C 17/22, C09D 1/00

(54) **Verfahren zum Aufbringen einer farbigen Beschichtung auf eine Oberfläche einer Glasscheibe.**

(30) Priorität: **21.07.87 DE 3724013**

(43) Veröffentlichungstag der Anmeldung:
**25.01.89 Patentblatt 89/04**

(45) Bekanntmachung des Hinweises auf die Patenterteilung:
**22.01.92 Patentblatt 92/04**

(84) Benannte Vertragsstaaten:
**AT BE DE ES FR GB IT SE**

(56) Entgegenhaltungen:
**EP-A- 0 132 078**
**EP-A- 0 178 155**
**DE-A- 1 109 230**
**DE-A- 3 724 014**
**US-A- 4 381 323**

(73) Patentinhaber: **FLACHGLAS AKTIENGESELL-SCHAFT**
**Otto-Seeling-Promenade 10-14**
**W-8510 Fürth(DE)**

(72) Erfinder: **Tünker, Gerhard**
**Asterlagerstrasse 132**
**W-4100 Duisburg 14(DE)**

(74) Vertreter: **Andrejewski, Walter, Dipl.-Phys. Dr. et al**
**Patentanwälte Andrejewski, Honke & Masch**
**Postfach 10 02 54 Theaterplatz 3**
**W-4300 Essen 1(DE)**

## Beschreibung

Die Erfindung bezieht sich gattungsgemäß auf ein Verfahren zum Aufbringen einer farbigen Beschichtung auf eine Oberfläche einer Glasscheibe, wobei eine Beschichtungsmischung pastenförmig bis fließfähig angemacht, die Beschichtungsmischung im Wege der Siebdrucktechnik auf die zu beschichtende Oberfläche aufgebracht und die Beschichtung durch Erwärmung des Aggregates aus Glasscheibe und Beschichtung eingebrannt wird. Die Erfindung bezieht sich insbesondere auf ein Verfahren zum Aufbringen einer solchen Beschichtung auf eine Kraftfahrzeugscheibe. Die Beschichtung kann die verschiedensten Funktionen erfüllen. Sie kann insbesondere der Dekoration dienen. Der Begriff "farbig" umfaßt auch schwarze und undurchsichtige Beschichtungen. Insbesondere kann die Beschichtung einen rahmenartigen undurchsichtigen Überzug des Randes einer Kraftfahrzeugscheibe bilden, die z. B. nach dem Verfahren der Direktverklebung in eine Kraftfahrzeugkarosserie eingesetzt wird. Die Beschichtung kann nichtleitend oder leitend ausgeführt sein. Das Einbrennen kann z. B. während einer Wärmebehandlung erfolgen, die die Glasscheibe aus anderen Gründen erfährt, beispielsweise bei einem Biege-oder Verspannvorgang.

Im Rahmen der (aus der Praxis) bekannten gattungsgemäßen Maßnahmen enthält die Beschichtungsmischung in beachtlicher Menge eine Glasfritte, die durch ein glasbildendes Gemenge ersetzt sein kann. Beim Einbrennen entsteht eine Beschichtung, die abgekühlt einen festen, glasartigen Charakter aufweist. Aus Gründen, die bisher nicht vollständig aufgeklärt sind, erfährt die Bruchfestigkeit des Aggregates aus Glasscheibe und Beschichtung eine störende Reduzierung. Die Bruchfestigkeit fällt im Bereich der Beschichtung unter Umständen auf ein Drittel des üblichen Wertes ab. Um dem entgegenzuwirken, ist es bekannt (DE 34 33 408), mit besonderen Glasfritten und besonderer Glasmatrix zu arbeiten und den linearen Wärmeausdehnungskoeffizientender Glasmatrix im Temperaturbereich von 20 bis 300 ° C kleiner einzurichten, als dem linearen Wärmeausdehnungskoeffizienten der Glasscheibe entspricht. Das ist aufwendig, nicht immer ausreichend genau einstellbar und führt daher nicht immer zu befriedigendem Erfolg.

Der Erfindung liegt die Aufgabe zugrunde, das gattungsgemäße Verfahren so zu führen, daß das Aggregat aus Glasscheibe und Beschichtung eine störende Reduzierung der Bruchfestigkeit im Bereich der Beschichtung nicht mehr erfährt. Es versteht sich, daß die Beschichtung im übrigen allen Beanspruchungen gewachsen sein muß, die solche Beschichtungen, ob leitend oder nichtleitend, insbesondere auf Kraftfahrzeugscheiben, überlicherweise aufzunehmen haben. Insbesondere muß die Beschichtung ausreichend haft- und kraftfest sein sowie eine hohe Korrosionsfestigkeit aufweisen. Sie soll aber insbesondere auch bei Verbundsicherheitsscheiben allen Anforderungen genügen.

Zur Lösung dieser Aufgabe lehrt die Erfindung, daß plättchenförmige anorganische Pigmente einer Teilchengröße von unter 40 μm, vorzugsweise von unter 20 μm, aus der Gruppe "Schichtsilikate, Oxide, Metallmodifikationen, Kohlenstoffmodifikationen" oder Mischungen davon mit einer Bindemittellösung auf Phosphatbasis zu einer glasfrittefreien Beschichtungsmischung angemacht werden sowie diese Beschichtungsmischung unmittelbar auf die zu beschichtende Oberfläche aufgebracht und die Beschichtung bei Temperaturen im Bereich zwischen 550 bis 700 ° C eingebrannt wird. Die angegebenen plättchenförmigen Pigmente sind genauer wie folgt definiert:

1) Schichtsilikate bezeichnet mineralogische und chemische Verbindungen, die eine plättchenförmige Kristallform aufweisen. Sie zerfallen beim Zerkleinern zu plättchenförmigen Pulverteilchen; - typische Schichtsilikate sind Glimmer, Talk und Tonmineralien.

2) Plättchenförmige Oxide sind oxidische Verbindungen, die entweder einen schichtförmigen Kristallaufbau besitzen und daher beim Mahlen bevorzugt plättchenförmig spalten, z. B. Gamma-Tonerde, oder durch ein Herstellungsverfahren in Form von plättchenförmigen Pulvern anfallen, beispielsweise plättchenförmige Pigmente aus Glas.

3) Plättchenförmige Metallmodifikationen bezeichnet plättchenförmige Metallpigmente. Ihre Dicke ist beachtlich kleiner als der maximale Durchmesser. Es gibt verschiedene Herstellungsverfahren für solche plättchenförmige Metallpigmente. Sie bestehen in der Regel aus reinen Metallen und sind im Handel.

4) Kohlenstoffmodifikationen bezeichnet Ruß und Graphit.

Nach bevorzugter Ausführungsform der Erfindung wird mit Schichtsilikaten oder Kohlenstoffmodifikationen oder Mischungen davon gearbeitet. Es versteht sich, daß die Beschichtungsmischung durch Beigabe von Wasser in bezug auf ihre Konsistenz so eingestellt werden kann, daß sie siebdruckfähig ist. Im allgemeinen wird man die Beschichtungsmischung aufbauen aus

10 bis 85 Gewichtsteilen des plättchenförmigen Pigmentes,

15 bis 50 Gewichtsteilen der Bindemittellösung, bezogen auf den Feststoffanteil.

Wenn die Farbgebung durch die plättchenförmigen anorganischen Pigmente nicht ausreichend ist, weil beispielsweise mit farblosen Pigmenten gearbeitet wird, können in die Beschichtungsmischung Zusätzlich andere in der Glas- und Keramikindustrie übliche Farbpigmente eingemischt werden, beispielsweise bis zu 60 Gewichtsteilen im Rahmen des vorstehend angegebenen Zahlenbeispiels.

Nach bevorzugter Ausführungsform der Erfindung wird bei dem erfindungsgemäßen Verfahren mit Glimmerpulver als plättchenförmigen Pigmenten gearbeitet, wobei zur Erzielung eines Perlglanz-Effektes auch mit Glimmerpulver gearbeitet werden kann, bei dem die einzelnen Glimmerplättchen eine metalloxidische Beschichtung aufweisen. Die Verwendung von Glimmerpulver zur Erzielung besonderer Farbeffekte in Beschichtungen ist grundsätzlich bekannt (DE 35 07 595), jedoch wird hier die Beschichtungsmischung mit einer Glasfritte oder mit glasbildendem Gemenge angemacht. - Im Rahmen der Erfindung liegt es insbesondere, mit Graphit bzw. zusätzlich mit Graphit als plättchenförmigen Pigmenten zu arbeiten. Auch mit Silberplättchen oder zusätzlich mit Silberplättchen kann gearbeitet werden.

Im Rahmen der Erfindung kann mit den verschiedensten Bindemittellösungen auf Phosphatbasis gearbeitet werden. Solche sind in der Literatur für andere Zwecke, nämlich zum Schutz der Oberfläche von gehärtetem Glas, beschrieben (DE 21 40 528). Nach bevorzugter Ausführungsform der Erfindung wird mit einer 50%-igen wäßrigen Aluminium-Phosphatlösung als Bindemittel gearbeitet, vorzugsweise mit einer solchen, deren $P_2O_5/Al_2O_3$-Verhältnis im Bereich 5,3 bis 3,7 liegt, und zwar in einer Beigabemenge von 15 bis 50 Gewichtsteilen, bezogen auf den Feststoffanteil. Werden zusätzlich andere in der Glas- und Keramikindustrie übliche Farbpigmente eingemischt, so wird nach bevorzugter Ausführungsform der Erfindung mit färbenden Oxiden oder Oxidpigmenten auf der Basis von Spinellen oder Zirkonaten gearbeitet. Alle Beschichtungsmischungen, die im Rahmen des erfindungsgemäßen Verfahrens geeignet sind, können durch eine Beigabe von Ruß leitend eingestellt werden, und zwar mit einer Rußmenge von bis zu 10 Gewichtsteilen.

In bezug auf eine allgemeine Mischungsregel ist das erfindungsgemäße Verfahren dadurch gekennzeichnet, daß mit 10 bis 85 Gewichtsteilen an plättchenförmigen anorganischen Pigmenten und 15 bis 50 Gewichtsteilen an Bindemittellösung bezogen auf den Feststoffanteil gearbeitet wird. Zweckmäßig wird mit einer Bindemittellösung gearbeitet, die einen Feststoffanteil von zumindest 20 Gew.-% aufweist.

Erfindungsgemäß werden plättchenförmige Pigmente, insbesondere auch solche, die in anderen Beschichtungselementen an sich bekannt sind, und Bindemittellösungen auf Phosphatbasis miteinander kombiniert. Überraschenderweise erhält man so eine Bindemittelmischung, die in der beschriebenen Weise im Wege der Siebdrucktechnik aufgebracht und eingebrannt werden kann. Das Einbrennen kann auch im Rahmen der Erfindung während eines Biege- oder Vorspannprozesses der Glasscheibe erfolgen. Überraschenderweise tritt eine Beeinträchtigung der Bruchfestigkeit des Aggregates aus Glasscheibe und eingebrannter Beschichtung nicht mehr auf. Die Beschichtung selbst genügt in mechanischer und auch in chemischer Hinsicht allen Anforderungen, und zwar auch dann, wenn sie durch Beigabe von Graphit leitend eingestellt wird. Das war nicht zu erwarten, nachdem die herrschende Lehre für Beschichtungen vergleichbarer Zweckbestimmung dahingeht. der Beschichtungsmischung Glasfritte bzw. glasbildende Gemenge beizumischen.

Ausführungsbeispiele

1) Schwarze siebdruck- und biegefähige Farbe für Verbundsicherheitsglas.

In wäßriger Lösung werden lösliche Phosphate, Ruß und Feinglimmerpigment (Korngröße < 40 $\mu$m) intensiv verrührt. Die gebrauchsfertige Lösung enthält dann etwa den folgenden Feststoffanteil in gelöster oder dispergierter Form

Glimmer        63 Gew.-%,
Ruß        9 Gew.-%,
$P_2O_5$        23 Gew.-%,
$Al_2O_3$        5 Gew.-%.

Der Wassergehalt der Farbe wird so eingestellt, daß die Farbe mit einem üblichen Siebdruckautomaten und einem Siebgewebe mit 62 Fäden pro cm gut druckbar ist. Die Farbe wird wie eine übliche Dekorfarbe auf Emailbasis eingesetzt. - Zur Dekorierung einer Kraftfahrzeugscheibe aus zwei einzelnen Flachglas-Scheiben, d. h. einer Verbundsicherheitsscheibe, wird auf eine Scheibe ein umlaufender schwarzer Rand gedruckt. Nach dem Trocknen der Scheibe wird das Scheibenpaar mit überlichen Trennmitteln versehen und so zusammengelegt, daß die bedruckte Fläche nach innen zum Scheibenwischraum zeigt. Anschließend wird das Scheibenpaar einem üblichen Biegeprozeß unterworfen und dann zu VSG weiterverarbeitet. Der schwarze Dekorrand befindet sich bei der fertigen Scheibe in der Verbundschicht.

2) Elekrisch leitfähige druckbare Dekorfarbe.

Eine wäßrige Farbmischung enthält als Feststoffanteil Graphit (Korngröße < 20 $\mu$m) und Ruß sowie Aluminiumphosphat in folgenden Anteilen (in Gew.-%):

Graphit        67 Gew.-%,

Ruß 8 Gew.-%,
$P_2O_5$ 21 Gew.-%,
$Al_2O_3$ 4 Gew.-%.

Die Farbe wird mit einem Siebdruckautomaten mit einem Siebgewebe, welches 49 Fäden pro cm aufweist, auf plane Floatglasscheiben aufgetragen und 4 min bei 630° C im Laborofen eingebrannt. Der spezifische Widerstand p der Schicht beträgt nach dem Einbrand p = 0,023 Ohm · cm.

3) Dekorfarbe mit Perlglanzeffekt.

Es wird eine Farbe in Wasser angemischt, die statt üblichem Glimmerpulver ein sogenanntes Perlglanzpigment, d. h. ein Pigment aus beschichtetem Muskovit-Glimmer, enthält. - Der Feststoffanteil der Farbe setzt sich zusammen aus:
Iriodin 500 53 Gew.-%,
$P_2O_5$ 38 Gew.-%,
$Al_2O_3$ 9 Gew.-%.

Nach dem Einbrand bei 630° C/4 min ergibt sich eine Farbschicht mit metallisch bronzefarbig schillernder Oberfläche.

Im Rahmen der Erfindung brauchbare Glimmerplättchen mit metalloxidischer Beschichtung bzw. Verfahren zu deren Herstellung sind beispielsweise beschrieben in
US-PS 30 87 828 (DE-PS 14 67 466),
DE-PS 20 09 566,
DE-PS 20 60 850,
DE-OS 35 28 256.

**Patentansprüche**

1. Verfahren zum Aufbringen einer farbigen Beschichtung auf eine Oberfläche einer Glasscheibe,

   wobei eine Beschichtungsmischung pastenförmig bis fließfähig angemacht, die Beschichtungsmischung im Wege der Siebdrucktechnik auf die zu beschichtende Oberfläche aufgebracht

   und die Beschichtung durch Erwärmung des Aggregates aus Glasscheibe und Beschichtung eingebrannt wird, **dadurch gekennzeichnet,** daß plättchenförmige anorganische Pigmente einer Teilchengröße von unter 40µm, vorzugsweise von unter 20 µm, aus der Gruppe

   "Schichtsilikate,
   Oxide,
   Metallmodifikationen,
   Kohlenstoffmodifikationen"

   oder Mischungen davon mit einer Bindemittellösung auf Phosphatbasis zu einer glasgrittefreien Beschichtungsmischung angemacht werden, sowie diese Beschichtungsmischung unmittelbar auf die zu deschichtende Oberfläche aufgebracht und die Beschichtung bei Temperaturen im Bereich zwischen 550 bis 700° C eingebrannt wird.

2. Verfahren nach Anspruch 1, dadurch gekennzeichnet, daß in die Beschichtungsmischung zusätzlich andere in der Glas- und Keramikindustrie übliche Farbpigmente eingemischt werden, und zwar in Mengen von bis zu 60 Gewichtsteilen.

3. Verfahren nach einem der Ansprüche 1 oder 2, dadurch gekennzeichnet, daß mit Glimmerpulver als plättchenförmigen Pigmenten gearbeitet wird.

4. Verfahren nach Anspruch 3, dadurch gekennzeichnet, daß mit Glimmerpulver gearbeitet wird, dessen Plättchen eine Metalloxidbeschichtung aufweisen.

5. Verfahren nach einem der Ansprüche 1 bis 4, dadurch gekennzeichnet, daß mit Graphit oder zusätzlich mit Graphit als plättchenförmigen Pigmenten gearbeitet wird.

6. Verfahren nach einem der Ansprüche 1 bis 5, dadurch gekennzeichnet, daß mit Silberplättchen oder zusätzlich mit Silberplättchen als plättchenförmigen Pigmenten gearbeitet wird.

7. Verfahren nach einem der Ansprüche 1 bis 6, dadurch gekennzeichnet, daß mit einer wäßrigen Aluminiumphosphatlösung als Bindemittel gearbeitet wird.

8. Verfahren nach Anspruch 7, dadurch gekennzeichnet, daß mit einer 50%-igen wäßrigen Aluminiumphosphatlösung gearbeitet wird, deren $P_2O_5/Al_2O_3$-Verhältnis im Bereich 5,3 bis 3,7 liegt, und zwar in einer Beigabemenge von 15 bis 50 Gewichtsteilen.

9. Verfahren nach einem der Ansprüche 2 bis 8, dadurch gekennzeichnet, daß zusätzlich färbende Oxide oder Oxidpigmente auf der Basis von Spinellen oder Zirkonaten eingearbeitet werden.

10. Verfahren nach einem der Ansprüche 1 bis 9, dadurch gekennzeichnet, daß die Beschichtungsmischung durch Beigabe von Ruß leitfähig eingestellt wird, und zwar mit einer Rußmenge von bis zu 10 Gewichtsteilen.

**11.** Verfahren nach einem der Ansprüche 1 bis 10, dadurch gekennzeichnet, daß mit 10 bis 85 Gewichtsteilen an plättchenförmigen anorganischen Pigmenten und 15 bis 50 Gewichtsteilen an Bindemittellösung bezogen auf den Feststoffanteil gearbeitet wird.

**12.** Verfahren nach einem der Ansprüche 1 bis 11, dadurch gekennzeichnet, daß mit einer Bindemittellösung gearbeitet wird, die einen Feststoffanteil von zumindest 20 Gew.-% aufweist.

## Claims

**1.** A process for the application of a coloured coating to a surface of a glass sheet,

in which a pasty to flowable coating mixture is prepared, the coating mixture is applied to the surface to be coated by means of the screen-printing process,

and the coating is stoved on by heating the combination of glass sheet and coating, *characterized in that* platelet-shaped inorganic pigments with a particle size of less than 40$\mu$ and preferably of less than 20$\mu$ of the

"Stratified silicates,
Oxides,
Metal modifications,
Carbon modifications"

groups or mixtures thereof are prepared with a phosphate-based binder solution to form a coating mixture that is free from glass frit, that this mixture is directly applied to the surface to be coated and that the coating is stoved-on at temperatures in the range between 550$^{\circ}$ and 700$^{\circ}$ C.

**2.** A process according to Claim 1, *characterized in that* other coloured pigments that are normal in the glass and ceramic industries are additionally incorporated into the coating mixture, and this in quantities of up to 60 parts by weight.

**3.** A process according to one of Claims 1 or 2, *characterized in that* mica powder is used as the platelet-shaped pigment.

**4.** A process according to Claim 3, *characterized in that* mica powder the platelets of which have a metallic oxide coating is used.

**5.** A process according to one of Claims 1 to 4, *characterized in that* graphite or additions of graphite are used as platelet-shaped pigments.

**6.** A process according to one of Claims 1 to 5, *characterized in that* silver platelets or additions of silver platelets are used as platelet-shaped pigments.

**7.** A process according to one of Claims 1 to 6, *characterized in that* an aqueous aluminium phosphate solution is used as a binder.

**8.** A process according to Claim 7, *characterized in that* a 50% aqueous aluminium phosphate solution is used, the $P_2O_5/Al_2O_3$ ratio of which is in the 5.3 to 3.7 range, this being in an addition quantity of 15 to 50 parts by weight.

**9.** A process according to one of Claims 2 to 8, *characterized in that* in addition colouring oxides or oxide pigments based on spinels or zirconates are used.

**10.** A process according to one of Claims 1 to 9, *characterized in that* the coating mixture can be adjusted to be electrically conductive by an addition of lampblack, this being with a quantity of lampblack up to 10 parts by weight.

**11.** A process according to one of Claims 1 to 10, *characterized in that* 10 to 85 parts by weight of platelet-shaped inorganic pigments and 15 to 50 parts by weight of binder solution relatively to the proportion of solids is used.

**12.** A process according to one of Claims 1 to 11, *characterized in that* a binder solution is used that contains at least a 20% proportion by weight of solids.

## Revendications

**1.** Procédé pour déposer un revêtement coloré sur une surface d'une plaque de verre, selon lequel on forme un mélange d'enduction de manière qu'il soit entre l'état pâteux et l'état fluide, on dépose le mélange d'enduction au cours de la mise en oeuvre de la technique de sérigraphie, sur la surface à recouvrir, et on fait cuire le revêtement en chauffant l'agrégat constitué par la plaque de verre et le revêtement, caractérisé en ce qu'on mélange des pigments minéraux en forme de plaquettes, formés de particules d'une taille inférieure à 40 $\mu$m et de préférence inférieure à 20 $\mu$m, du groupe "silicates lamellés, oxydes, agents métalliques de modification, agents de modification à base de carbone", ou des mélanges de telles substances avec une solution formant liant à base de phosphate pour former un mélange d'enduction sans fritte de verre, et qu'on dépose ce mélange d'enduction directement sur la surface à recouvrir et qu'on fait cuire le revêtement à des températures situées dans la gamme comprise entre 550 et 700°C.

2. Procédé selon la revendication 1, caractérisé en ce qu'on mélange en outre, dans le mélange d'enduction, d'autres pigments colorés usuels dans l'industrie du verre et de la céramique, et ce en des quantités atteignant jusqu'à 60 parties en poids.

3. Procédé selon l'une des revendications 1 ou 2, caractérisé en ce qu'on travaille avec une poudre de mica en tant que pigments en forme de plaquettes.

4. Procédé selon la revendication 3, caractérisé en ce qu'on travaille avec une poudre de mica, dont les plaquettes possèdent un revêtement d'oxyde métallique.

5. Procédé selon l'une des revendications 1 à 4, caractérisé en ce qu'on travaille avec du graphite ou en outre avec du graphite en tant que pigments en forme de plaquettes.

6. Procédé selon l'une des revendications 1 à 5, caractérisé en ce qu'on travaille avec des plaquettes d'argent ou en outre avec des plaquettes d'argent en tant que pigments en forme de plaquettes.

7. Procédé selon l'une des revendications 1 à 6, caractérisé en ce qu'on travaille avec une solution aqueuse de phosphate d'aluminium en tant que liant.

8. Procédé selon la revendication 7, caractérisé en ce qu'on travaille avec une solution aqueuse à 50 % de phosphate d'aluminium, dont le rapport $P_2O_5/Al_2O_3$ est situé dans la gamme comprise entre 5,3 et 3,7, et ce avec une quantité ajoutée comprise entre 15 et 50 parties en poids.

9. Procédé selon l'une des revendications 2 à 8, caractérisé en ce qu'on introduit en outre des oxydes ou des piments à base d'oxyde colorants sur la base de spinnelles ou de zirconates.

10. Procédé selon l'une des revendications 1 à 9, caractérisé en ce qu'on règle le mélange d'enduction de manière qu'il soit conducteur grâce à l'adjonction de suie, et ce avec une quantité de suie atteignant jusqu'à 10 parties en poids.

11. Procédé selon l'une des revendications 1 à 10, caractérisé en ce qu'on travaille avec 10 à 85 parties en poids de pigments minéraux en forme de plaquettes et 15 à 50 parties en poids d'une solution formant liant, ces parties en poids étant rapportées au pourcentage de substances solides.

12. Procédé selon l'une des revendications 1 à 11, caractérisé en ce qu'on travaille avec une solution formant liant, qui comporte un pourcentage de substances solides égal à au moins 20 % en poids.